# EUROPÄISCHE PATENTSCHRIFT

(11) **EP 2 992 048 B1**
(45) Veröffentlichungstag und Bekanntmachung des Hinweises auf die Patenterteilung: **04.07.2018**
(21) Anmeldenummer: 14724637.5
(22) Anmeldetag: 02.05.2014
(51) Int. Cl.: C08L 95/00, C08L 23/00, E01C 7/32, C08L 75/00, C08L 101/10, C08G 18/83, C08G 65/336

(54) **VERKEHRSFLÄCHENAUFBAU MIT MINDESTENS EINER ZWISCHENSCHICHT**
CIRCULATION AREA CONSTRUCTION COMPRISING AT LEAST ONE INTERMEDIATE COURSE
CONCEPTION DE SURFACES DE CIRCULATION AVEC AU MOINS UNE COUCHE INTERMÉDIAIRE

(30) Priorität: 02.05.2013 DE 102013007449
(43) Veröffentlichungstag der Anmeldung: 09.03.2016
(73) Patentinhaber: DENSO-Holding GmbH & Co., 51371 Leverkusen (DE)
(72) Erfinder: KAISER, Thomas, Markus, 52459 Inden (DE)
(74) Vertreter: Geskes, Christoph
(86) Internationale Anmeldenummer: PCT/EP2014/001180
(87) Internationale Veröffentlichungsnummer: WO 2014/177285

(56) Entgegenhaltungen:
- WO-A1-2006/041560
- AT-B- 205 743
- DE-A1- 4 330 113

## Beschreibung

Die vorliegende Erfindung betrifft einen Verkehrsflächenaufbau umfassend mindestens eine Unterschicht, mindestens eine Asphaltdeckschicht und mindestens eine Zwischenschicht, wobei die Zwischenschicht auf der mindestens einen Unterschicht aufgebracht ist, sowie die Verwendung eines Materials zur Herstellung der mindestens einen Zwischenschicht.

Verkehrsflächen insbesondere für Autobahnen, aber auch sonstige Verkehrsflächen einschließlich Parkplätzen et cetera werden zum Beispiel in konventioneller Betonbauweise hergestellt. Diese besteht insbesondere aus einem mindestens zweischichtigen Aufbau mit einer Unterkonstruktion für eine Straße, insbesondere einem Unterbeton, und einem hochwertigen Oberbeton, wobei vorzugsweise der Oberbeton gebrochene Gesteinskörnungen, die nicht problematisch in Hinblick auf die Alkali-Kieselsäure-Reaktion sind, sowie einen hohen Zementgehalt aufweist. Der Oberbeton ist relativ aufwendig herzustellen, da dieser mit einer möglichst lärmarmen, griffigen und dauerhaften Oberflächentextur herzustellen ist.

Die Betonkonstruktion derartiger in konventioneller Betonbauweise hergestellter Verkehrsflächen benötigt hohe Druckfestigkeiten sowie hohe Spalt- und Biegezugfestigkeiten. Bei steigender Verkehrsbelastung muss zudem die Dicke der Betondecke erhöht, und Maßnahmen gegen Rissneigung getroffen werden. Solche Maßnahmen sind beispielsweise eine Vorsehung einer Bewehrung oder eine Zugabe von Schwindreduzierern.

Alternativ zu der konventionellen Betonbauweise werden Verkehrsflächen aus Beton hergestellt durch fugenlose, einschichtige, durchlaufend bewehrte Betondecken. Eine derartige Betondecke wird anschließend mit einer dünnen Asphaltdeckschicht versehen. Zwischen der Betondecke und der Asphaltdeckschicht wird eine bitumengebundene Verklebeschicht angeordnet, um eine hinreichende Haftung der Asphaltdeckschicht auf der fugenlosen Betondecke zur Verfügung zu stellen.

Während bei der eingangs beschriebenen konventionellen Betonweise mit Unterbeton und Oberbeton insbesondere die Material- und Herstellungskosten aufgrund des hochwertigeren Oberbetons und des zweischichtigen Einbaus mit zwei Betonfertigern mit einer in einem weiteren Einbauschritt speziell herzustellenden Oberflächentextur des Oberbetons relativ hoch sind, ist nachteilig bei der nachstehend beschriebenen Alternative unter Einsatz einer fugenlosen Betondecke, dass die Dicke der Verklebeschicht abnimmt, da das in dieser enthaltene Bitumen zumindest teilweise in die Asphaltdeckschicht aufsteigt. Hierdurch wird die Haftung der Asphaltdeckschicht auf der fugenlosen Betondecke verringert, es kommt insbesondere bei Kälte zu Rissbildung, und nachfolgender Erosion durch Wasserzutritt einhergehend mit einem teilweisen Abplatzen der Asphaltdeckschicht.

DE 43 30 113 A1 offenbart ein Verfahren zum Legen einer Straße, zur Errichtung einer Start- bzw. Landebahn, zur Errichtung eines Flughafens und zum Legen einer Eisenbahnschiene durch künstliches Errichten einer aus hydrophoben Teilchen bestehenden Bodenschicht unterhalb des Bodens. Die Bodenschicht kann oberhalb des Grundwasserspiegels und unterhalb des Gefriertemperaturbereiches liegen. Die hydrophoben Teilchen können aus wasserabweisendem Sand bestehen, bei dem es sich um mit einem wasserabweisenden Mittel behandelten Sand handelt. Die hydrophoben Teilchen können aus Teilchen bestehen, welche mit einer oder mehreren Arten wasserabweisender Mittel aus Silanverbindungen, Silikonverbindungen und fluorhaltigen Mitteln behandelt sind.

AT 205743 B offenbart ein Verfahren zur Herstellung von elastomeren Organpolysiloxan-Produkten, welche als Dichtungsmaterial beispielsweise zum Füllen von Fugen an Straßendecken einsetzbar sind.

WO 2006/041560 A1 offenbart Polymere und deren Verwendung in Asphaltzusammensetzungen und Asphaltbeton, wobei die modifizierte Asphaltzusammensetzung einen naphthenischen Asphalt und ein Vinyl-Block-Copolymer enthält.

Es ist daher Aufgabe der vorliegenden Erfindung, einen Verkehrsflächenaufbau zur Verfügung zu stellen, welcher einerseits kostengünstig herstellbar ist, andererseits einen zumindest verbesserten Schutz, insbesondere der mindestens einen Unterschicht, insbesondere der tragenden Unterkonstruktion einer Straße, vor Wasserzutritt und möglicher Erosion bietet.

Diese Aufgabe wird erfindungsgemäß gelöst durch einen Verkehrsflächenaufbau umfassend mindestens eine Unterschicht, mindestens eine Asphaltoberschicht und mindestens eine Zwischenschicht, die auf der mindestens einen gebundenen unteren Schicht aufgebracht ist, wobei auf der Zwischenschicht bevorzugt die mindestens eine Asphaltdeckschicht angeordnet ist, und wobei die mindestens eine Zwischenschicht ein Material umfasst, umfassend mindestens ein silanterminiertes Polymer bzw. aus einem Material hergestellt ist, umfassend mindestens ein silanterminiertes Polymer, wobei das mindestens eine silanterminierte Polymer ausgewählt ist aus einer Gruppe umfassend Polyethylen- und/oder Polypropylenoxid, auch mit Urethan-Segmenten, und/oder Polyurethan.

Die Zwischenschicht ist vorzugsweise elastisch ausgebildet. Weiter bevorzugt weist die Zwischenschicht rissüberbrückende Eigenschaften auf. Risse im Sinne der vorliegenden Erfindung haben eine Breite von mindestens etwa 0,1 mm, weiter bevorzugt in einem Bereich von etwa 0,5 mm bis etwa 1,0 mm. Die Risse haben eine Länge von mindestens etwa 0,5 cm, weiter bevorzugt eine Länge in einem Bereich von etwa 1 cm bis etwa 20 m. Die Risse sind insbesondere in der mindestens einen Unterschicht angeordnet, damit unter Verkehrsbelastung keine größeren Zugspannungen auftreten können. Vorzugsweise ist die mindestens eine Zwischenschicht bitumenfrei, das heißt weist keinerlei Bitumen auf.

Die mindestens eine Unterschicht im Sinne der vorliegenden Erfindung ist vorzugsweise eine zumindest teilweise gebundene Unterschicht, weiter bevorzugt eine vollständig gebundene Unterschicht. Die Bindung kann dabei durch Einsatz von Bindemitteln wie Zement, Kalk und/oder Bitumen erfolgen. Besonders bevorzugt weist die mindestens eine Unterschicht eine geringe Zugspannung auf. Hierzu weist die zumindest eine Unterschicht vorzugsweise Risse auf, wie diese vorstehend definiert sind. Vorzugsweise werden dabei Schollen ausgebildet mit einer Kantenlänge kleiner gleich etwa 2,5 m. Die mindestens eine Unterschicht kann insbesondere aus Beton und/oder Asphalt bestehen.

Die mindestens eine Zwischenschicht kann bei der Neuherstellung von Verkehrsflächen auf mindestens eine neu hergestellte Unterschicht aufgebracht werden. Die mindestens eine Zwischenschicht kann jedoch auch bei der Reparatur beziehungsweise Wiederherstellung oder Aufarbeitung von Verkehrsflächen eingesetzt werden. Dazu kann die mindestens eine Zwischenschicht beispielsweise aufgebracht werden auf einer Unterschicht aus Beton, wobei die Betonschicht beispielsweise zur Verfügung gestellt werden kann durch einen Oberbeton oder eine Unterkonstruktion aus Unterbeton. Die Betonschicht wird vorzugsweise entspannt, beispielsweise durch Einsatz einer Polygonal-Walze, die mittels einer Zugmaschine über die Betonschicht gezogen wird, und hierdurch Risse in der Betonschicht erzeugt. Dadurch wird die Zugspannung verringert, gleichzeitig bleibt jedoch die Druckfestigkeit der Betonschicht im Wesentlichen erhalten. Dabei kann auch vorgesehen sein, dass zunächst eine Abfräsung der Oberfläche der Betonschicht erfolgt und anschließend diese wie beschrieben gebrochen wird. Alternativ ist es beispielsweise möglich bei Asphaltdeckschichten diese aufzufräsen, das aufgenommene Asphaltfräsgut zu mahlen, mit einem Bindemittel, insbesondere Zement, Kalk oder Bitumen zu versehen und wieder anzuwalzen. Aufgrund des Mahlschrittes weisen derartige Unterschichten im Sinne der vorliegenden Erfindung ebenfalls eine geringe Zugspannung bei gleichzeitig hoher Druckfestigkeit auf. Auf eine solchermaßen hergestellte Unterschicht kann dann die mindestens eine Zwischenschicht aufgebracht werden.

Die mindestens eine Zwischenschicht ist aus einem niedrigviskosen Material hergestellt, welches in flüssiger Form appliziert wird. Das niedrigviskose Material ist einkomponentig ausgebildet, so dass es einfach verarbeitet werden kann. Es weist keinerlei Bitumen oder Asphalt auf. Insbesondere enthält es auch keine mittleren oder groben Gesteinskörnungen, so dass auch keine Hohlräume in dem niedrigviskosen Material vorliegen, so dass letztendlich mit diesem eine Zwischenschicht hergestellt werden kann, welche nahezu hohlraumfrei oder hohlraumfrei ist. Die Zwischenschicht kann vorteilhafterweise mit einem üblichen Straßenfertiger aufgebracht werden.

Die erfindungsgemäße Verkehrsflächenkonstruktion weist den großen Vorteil auf, dass beispielsweise bei einer Neuherstellung einer solchen Verkehrsfläche für die mindestens eine Unterschicht ein einfacher Beton, auch in Form einer fugenlosen Betonschicht, eingesetzt werden kann, der eine ausreichende Druckfestigkeit zur Verfügung stellt. Dieser einfache Beton wird vorteilhafterweise entspannt, um Zugspannungen, die in diesem vorhanden sind, zu verringern, wobei beispielsweise eine Verringerung von Zugspannung bereits durch Vorsehung einer spezifischen Betonmischung, die leicht reißt im getrockneten Zustand, oder aber durch Überfahren einer hergestellten Betonschicht mit einer geeigneten Walze oder ähnliches erfolgen kann. Auf diese mindestens eine Unterschicht aus Beton wird dann die mindestens eine Zwischenschicht aufgebracht, auf dieser dann mindestens eine Asphaltoberschicht, insbesondere eine Asphaltdeckschicht, aufgebracht wird, die eine verringerte Dicke aufweisen kann. Durch die mindestens eine Zwischenschicht ist ein hinreichender Schutz vor Eindringen von Wasser und gleichzeitig eine hinreichende Haftung einerseits sowohl zu der mindestens einen Asphaltoberschicht als auch der mindestens einen Unterschicht zur Verfügung gestellt. Durch den Einsatz eines einfachen Betons für die mindestens eine Unterschicht als auch einer verringerten Dicke des Asphaltoberbaues durch die mindestens eine Asphaltoberschicht, insbesondere Asphaltdeckschicht, sind die Materialkosten des erfindungsgemäßen Verkehrsflächenaufbaus im Vergleich zum konventionellen Aufbau erheblich gemindert. Zudem sind auch die Herstellungskosten gesenkt, da die Aufbringung der mindestens einen Zwischenschicht einfacher erfolgen kann und eine aufwendige Texturierung der Oberfläche beispielsweise einer Betonfahrbahn nicht notwendig ist. Besonders bevorzugt kann auf der mindestens einen Zwischenschicht eine Gesteinskörnung oder ein Gummigranulat aufgebracht werden, um hier eine weiter verbesserte Verzahnung und Haftung zu der mindestens einen Asphaltoberschicht zur Verfügung zu stellen.

Die mindestens eine Asphaltoberschicht im Sinne der vorliegenden Erfindung ist als Asphaltdeckschicht ansprechbar, wenn nur genau eine Asphaltoberschicht eingesetzt ist. Im Sinne der vorliegenden Erfindung kann jedoch auch mehr als mindestens eine Asphaltoberschicht eingesetzt werden, wobei diejenige Schicht, die mit ihrer Oberseite die eigentliche Verkehrsfläche zur Verfügung stellt, und im unmittelbaren Kontakt mit überfahrenden Fahrzeugen et cetera kommt, als Asphaltdeckschicht anzusprechen ist.

Der erfindungsgemäße Verkehrsflächenaufbau ist vorzugsweise genau dreischichtig ausgebildet und weist eine Unterschicht, eine auf dieser angeordnete Zwischenschicht, und eine auf der Zwischenschicht angeordnete Asphaltoberschicht, als Asphaltdeckschicht anzusprechen, auf. Der erfindungsgemäße Verkehrsflächenaufbau zeichnet sich vorteilhafterweise dadurch aus, dass die Zwischenschicht unmittelbar mit der Asphaltoberschicht verbunden ist. Darüber hinaus ist vorteilhafterweise die Zwischenschicht mit mindestens einer Unterschicht verbunden, wobei auch mehrere Unterschichten vorhanden sein können. Bevorzugt ist genau eine Unterschicht aus Beton vorgesehen, wobei der Beton zugentspannt ist. Die Asphaltoberschicht, die unmittelbar auf der Zwischenschicht angeordnet ist, ist vorteilhafterweise genau einschichtig ausgebildet, und kann erheblich dünner, bevorzugt in einer Dicke in einem Bereich von etwa 1,5 cm bis etwa 4 cm, weiter bevorzugt in einem Bereich von etwa 2 cm bis etwa 3 cm, auf die Zwischenschicht unmittelbar aufgebracht werden. Der erfindungsgemäße Aufbau kann auch verwirklicht sein im Rahmen von Reparaturen oder nachträglichen Ausrüstungen von bestehenden Aufbauten mit dem erfindungsgemäßen Verkehrsflächenaufbau in voller, oder auch nur in teilweiser Anwendung.

Das silanterminierte Polymer des für die Herstellung der Zwischenschicht eingesetzten Materials ist erfindungsgemäß ausgewählt aus einer Gruppe umfassend Polyethylen- und/oder Polypropylenoxid, auch mit Urethan-Segmenten, und/oder Polyurethan. Vorteilhafterweise ist das mindestens eine silanterminierte Polymer ein Polyether, und besonders bevorzugt ist es ein Methoxy- oder Ethoxy-silanterminiertes Polypropylenoxid, welches weiter bevorzugt zwischen dem Polyether-Teil und der Silan-Gruppe mindestens eine, bevorzugt genau eine, Urethan-Gruppe an jedem Ende aufweisen kann. Solche Urethan-Gruppen werden als Urethan-Segmente im Sinne der vorliegenden Erfindung verstanden, die bevorzugt in den genannten silanterminierten Polymeren vorliegen.

Bevorzugt ist das silanterminierte Polymer gebildet aus einer Polyether-Gruppe aus Polyethylenoxid und/oder Polypropylenoxid, welche terminiert ist mit einer Alkoxydialkylsilylalkylcarbamat-Gruppe, Dialkoxyalkylsilyalkylcarbamat-Gruppe und/oder Trialkoxysilylalkylcarbamat-Gruppe. Besonders bevorzugt ist das eingesetzte Polyethylen- und/oder Polypropylenoxid als Polyether endterminiert durch identische Silylalkylcarbamat-Gruppen wie vorstehend beschrieben. Besonders bevorzugt erfolgt eine Endterminierung durch eine Dimethoxy- oder Diethoxymethylsilylmethyl- oder -propylcarbamat-Gruppe. Bevorzugt ist das silanterminierte Polymer gemäß der vorliegenden Erfindung derart ausgebildet, dass beiden endständigen Hydroxid-Gruppen des Polyethylen- und/oder Polypropylenoxides benachbart genau eine Urethan-Gruppe ist, welche über eine Methylen- oder Propylen-Brücke mit einem mono-, di- oder tri-substituierten Silylrest verbunden ist. Der Silylrest ist vorzugsweise ausgewählt aus einer Gruppe umfassend Dimethoxymethylsilyl-, Diethoxymethyl-, Dimethoxyethylsilyl-, Diethoxyethylsilyl-, Trimethoxysilyl- und/oder Triethoxysilyl-. Die mit einer Methylen- oder Propylen-Brücke ausgestatteten silanterminierten Polymere werden auch als α-(silan)terminierte (C₁-Alkyl) bzw. als γ-(silan)terminierte (C₃-Alkyl) Polymere angesprochen.

Silanterminierte Polymere, gebildet aus Polyethyenglykol und/oder Polypropylenglykol (als alternative Bezeichnungen zu Polyethlylenoxid und/oder Polypropylenoxid) werden hergestellt durch Reaktion derselben mit geeigneten Silyl-Resten, die eine reaktive Isocyanat-Gruppe aufweisen. Diese werden als Isocyanatoalkylalkoxysilane bezeichnet. Wird das silanterminierte Polymer hergestellt aus Polyurethan, kann eine endständige Cyanat-Gruppe desselben mit Silylderivaten reagieren, die eine reaktive Aminogruppe, insbesondere eine reaktive sekundäre Amino-Gruppe, aufweisen. Diese Derivate werden als 2-Aminoalkylalkoxysilane angesprochen.

Die genannten silanterminierten Polymere sind als Harze anzusprechen, und sind insbesondere als Prepolymere anzusprechen, da diese im nicht vernetzten Zustand eingesetzt werden. Aufgrund einer Vernetzungsreaktion der silanterminierten Polymere in der Zwischenschicht ist die mindestens eine Zwischenschicht nach Fertigstellung nicht anschmelzbar und wird beispielsweise bei Auftragung von mindestens einer Asphaltoberschicht lediglich erweichen. Auf der mindestens einen Zwischenschicht aufzubringende Körnung, beispielsweise Gesteinskörnungen oder Gummigranulate, sind daher vorteilhafterweise unmittelbar nach Austragung des Materials zur Herstellung der Zwischenschicht auf diese aufzugeben, können jedoch auch beispielsweise vor Aufbringung der mindestens einen Asphaltoberschicht auf die mindestens eine Zwischenschicht aufgebracht werden. Die in der Silylgruppe vorhandenen Alkoxyreste, insbesondere Methoxy-, Ethoxy- und /oder Propoxy-Gruppen, hydrolisieren bei Kontakt mit Feuchtigkeit, so dass reaktive Silanole entstehen, die dann entweder zu oligomeren Siloxanen kondensieren oder aber, wie erfindungsgemäß insbesondere vorgesehen, mit der Unterschicht und/oder der Asphaltoberschicht reagieren und feste kovalente Anbindungen ausbilden.

Silanterminierte Polyurethane im Sinne der vorliegenden Erfindung weisen bevorzugt ein Polyoxypropylen-Rückgrat, und zwischen den beiden Enden desselben und der inständigen Silan-Gruppe mindestens eine, zwei oder mehrere Urethan-Gruppen, die ein Urethan-Segment bilden, auf. Beispiele für silanterminierte Polyurethane sind im Handel erhältlich unter der Bezeichnung Polymer ST, Evonik Hanse GmbH, Geesthacht, Deutschland. Ein Beispiel für silanterminierte Polyether auf Basis von Polypropylenoxid und/oder Polyethylenoxid sind GENIOSIL STP E10, GENIOSIL WP1 oder GENIOSIL WP2 der Wacker Chemie AG, München, Deutschland.

Das Material, welches zur Herstellung der mindestens einen Zwischenschicht eingesetzt ist, kann beispielsweise durch Spritzen, Verschütten aus Eimern, mittels Schiebern oder Ähnlichem auf der mindestens einen Unterschicht verteilt und verarbeitet werden.

Das mindestens eine silanterminierte Polymer ist vorteilhafterweise in einer Menge in einem Bereich von etwa 20 Gew.-% bis etwa 70 Gew.-%, bevorzugt in einer Menge in einem Bereich von etwa 30 Gew.-% bis etwa 65 Gew.-%, weiter bevorzugt in einer Menge in einem Bereich von etwa 35 Gew.-% bis etwa 60 Gew.-%, und noch weiter bevorzugt in einer Menge in einem Bereich von etwa 40 Gew.-% bis etwa 60 Gew.-%, bezogen auf die Gesamtmenge des Materials, in diesem enthalten. Vorteilhafterweise weist das mindestens eine silanterminierte Polymer endständige Methoxy-, Ethoxy- und/oder Propoxy-Gruppen auf, wobei ein, zwei oder drei solche Gruppen vorgesehen sein können. Bevorzugt sind zwei solcher Gruppen, weiter bevorzugt zwei Methoxy- oder zwei EthoxyGruppen vorgesehen. Die weitere Molekülgruppe bei Vorsehung nur einer oder von zwei solchen Gruppen kann eine Alkyl-Gruppe mit ein bis zwölf Kohlenstoffatomen sein, bevorzugt eine Methyl-, Ethyl- oder Propyl-Gruppe. Die vorstehende Definition des silanterminierten Polymers mit Alkoxygruppen bezieht sich auf das Präpolymer, also das nicht vernetzte bzw. nicht hydrolisierte Polymer. In dem fertigen Verkehrsflächenaufbau sind die genannten Alkoxygruppen nicht mehr bzw. nur teilweise enthalten, je nach Hydrolisierungsgrad.

Weiter vorteilhafterweise umfasst das Material weiterhin mindestens einen Polymethacrylsäureester. Vorteilhafterweise ist die Estergruppe des mindestens einen Polymethacrylsäureesters gebildet aus einem Rest R mit 2 bis 20 Kohlenstoffatomen, vorteilhafterweise mit einem Rest R mit 6 bis 18 Kohlenstoffatomen, weiter bevorzugt mit einem Rest R mit 10 bis 14 Kohlenstoffatomen. Besonders bevorzugt erfolgt eine Veresterung von Polymethacrylsäure mit linearen Alkoholen, so dass der Rest R vorzugsweise linear und nicht verzweigt ist. Besonders bevorzugt erfolgt eine Veresterung mit Dodecanol.

Der mindestens eine Polymethacrylsäureester ist vorteilhafterweise von dem Material in einer Menge in einem Bereich von etwa 4 Gew.-% bis etwa 15 Gew.-%, weiter bevorzugt in einer Menge in einem Bereich von etwa 6 Gew.-% bis etwa 14 Gew.-%, noch weiter bevorzugt in einer Menge in einem Bereich von etwa 7 Gew.-% bis etwa 12 Gew.-%, jeweils bezogen auf die Gesamtmenge des Materials, umfasst.

Weiterhin umfasst das Material vorteilhafterweise mindestens einen Füllstoff und/oder Ruß. Der Füllstoff ist vorteilhafterweise ausgewählt aus einer Gruppe umfassend pulverförmige mineralische Füllstoffe. Besonders bevorzugt ist der Füllstoff ausgewählt aus einer Gruppe umfassend Kreide, Talkum und/oder Kalksteinmehl. Der mindestens eine Füllstoff ist vorteilhafterweise in einer Menge in einem Bereich von etwa 20 Gew.-% bis etwa 50 Gew.-%, weiter bevorzugt in einer Menge in einem Bereich von etwa 25 Gew.-% bis etwa 45 Gew.-%, jeweils bezogen auf die Gesamtmenge des Materials, von diesem umfasst. Ruß ist vorteilhafterweise von dem Material umfasst in einer Menge in einem Bereich von etwa 1 Gew.-% bis etwa 10 Gew.-%, weiter bevorzugt in einer Menge von etwa 3 Gew.-% bis etwa 7 Gew.-%, jeweils bezogen auf die Gesamtmenge des Materials.

Weiterhin kann das Material mindestens noch einen Katalysator umfassen, ausgewählt aus der Gruppe der primären, sekundären oder tertiären Amine, oder ausgewählt aus einer Gruppe umfassend Organo-Zinn-Derivate, insbesondere Dibutylzinndilaurat. Als Katalysatoren können insbesondere auch je nach eingesetztem silanterminierten Polymer Aminosilane fungieren, beispielsweise N-Aminoethyl-Aminopropyl-Trimethoxysilan. Insbesondere bei Einsatz silanterminierter Polymere, hergestellt aus Polypropylenglykol und/oder Polyethylenglykol, mit mindestens einem, bevorzugt genau einem Urethansegment, und einer Methylen- und/oder Propylen-Brücke, kann auch vorgesehen sein, keinen Katalysator einzusetzen. Es können insbesondere als Katalysatoren eingesetzt werden solche ausgewählt aus einer Gruppe umfassend Aminosilane und/oder Zinnbasierte, insbesondere organische Katalysatoren, wie vorstehend beschrieben. Vorteilhafterweise ist der Katalysator ausgewählt aus einer Gruppe umfassend sekundäre Amine. Weiter bevorzugt ist der Katalysator ausgewählt aus einer Gruppe umfassend sekundäre Amine mit endständigen Hydroxygruppen. Besonders bevorzugt ist der Katalysator Diethanolamin. Der Katalysator ist vorteilhafterweise in einer Menge in einem Bereich von etwa 0,1 Gew.- % bis etwa 2 Gew.-%, weiter bevorzugt in einer Menge in einem Bereich von etwa 0,2 Gew.-% bis 1,6 Gew.-%, jeweils bezogen auf die Gesamtmenge des Materials, von diesem umfasst.

Des Weiteren kann das Material noch mindestens einen Weichmacher umfassen. Der mindestens eine Weichmacher ist vorteilhafterweise ausgewählt aus einer Gruppe umfassend Phthalatester, Alkansulfonsäurephenylester und/oder Polyether. Als Polyether wird vorzugsweise eingesetzt ein Polyethylenglykol oder Polypropylenglykol mit einem Molekulargewicht in einem Bereich zwischen etwa 200 und etwa 15000, bevorzugt zwischen etwa 500 und etwa 10000, weiter bevorzugt zwischen 1000 und 4000. Weichmacher müssen jedoch nur dann vorgesehen sein, sollte das Material keine geeignete Viskosität, insbesondere entsprechend niedrige Viskosität aufweisen, so dass dieses gut verarbeitbar ist zur Herstellung der Zwischenschicht. Der mindestens eine Weichmacher ist vorteilhafterweise in einer Menge in einem Bereich von etwa 0,1 bis etwa 20 Gew.-%, bevorzugt in einer Menge in einem Bereich von etwa 2 Gew.-% bis etwa 15 Gew.-%, noch weiter bevorzugt in einer Menge in einem Bereich von etwa 5 Gew.-% bis etwa 15 Gew.-%, bezogen auf die Gesamtmenge des Materials, von diesem umfasst.

Das im erfindungsgemäßen Verkehrsflächenaufbau eingesetzte Material weist vorteilhafterweise eine dynamische Viskosität in einem Bereich von etwa 0,5 Pa*s bis etwa 25 Pa*s, weiter bevorzugt in einem Bereich von etwa 4 Pa*s bis etwa 20 Pa*s bei einer Temperatur von 23 °C in einem Bereich von 1 U/min. bis 100 U/min., gemessen in Übereinstimmung mit der Norm ISO 3219 bei einer Scherrate von 20 s⁻¹. Vorteilhafterweise weist das eingesetzte Material ein thixotropes, und besonders bevorzugt ein selbstnivellierendes Verhalten auf. Das Material kann dabei auch noch mindestens ein Thixotropiermittel umfassen, vorzugsweise ein solches ausgewählt aus einer Gruppe umfasssend pyrogene Kieselsäure. Das Thixotropiermittel kann zugegen sein in einer Menge in einem Bereich von etwa 0,05 Gew.-% bis etwa 10 Gew.-%, weiter bevorzugt in einem Bereich von etwa 1 Gew.-% bis etwa 8 Gew.-%., bezogen auf die Gesamtmenge des Materiales.

Das vom Material umfasste mindestens eine silanterminierte Polymer weist vorteilhafterweise eine dynamische Viskosität in einem Bereich von etwa 0,2 Pa*s bis etwa 20 Pa*s, weiter bevorzugt in einem Bereich von etwa 0,5 Pa*s bis etwa 13 Pa*s auf, gemessen bei einer Temperatur von 25 °C gemäß DIN 51562.

Außer den bereits genannten Additiven Katalysatoren, Weichmachern u. ä. kann das Material weiterhin umfassen ein Additiv ausgewählt aus einer Gruppe umfassend Wasserfänger, Antioxidantien, Haftvermittler, UV-Stabilisatoren und/oder Farben bzw. Farbpigmente. Besonders bevorzugt umfasst das Material dabei mindestens einen Wasserfänger, ausgewählt aus einer Gruppe umfassend Alkoxysilane und/oder Acryloxysilane. Besonders bevorzugt sind dabei di- oder trifunktionelle Verbindungen der genannten Art, und besonders bevorzugt difunktionelle α-Methacryloxysilane und Vinyltrimethoxysilan. Der mindestens eine Wasserfänger ist in dem Material zugegen in einer Menge von etwa 0,05 Gew.-% bis etwa 5 Gew.-%, weiter bevorzugt in einer Menge in einem Bereich von etwa 0,8 Gew.-% bis etwa 2,5 Gew.-%, bezogen auf die Gesamtmenge des Materiales. Soweit ein Haftvermittler zugegen ist, ist dieser ausgewählt aus einer Gruppe umfassend Oligosiloxane oder sonstige organofunktionelle Silane sowie Aminosilane. Im Falle der Aminosilane können diese gleichzeitig als Katalysatoren wirken. Bevorzugt sind im Falle der Vorsehung mindestens eines Haftvermittlers in Form eines Aminosilans solche eingesetzt, wie vorstehend in Zusammenhang mit den vorteilhafterweise Katalysatoren beschrieben. Der mindestens eine Haftvermittler ist vorteilhafterweise in einer Menge von etwa 0,5 Gew.-% bis etwa 5 Gew.-%, weiter bevorzugt einer Menge in einem Bereich von etwa 0,8 Gew.-% bis etwa 2,5 Gew.-%, bezogen auf die Gesamtmenge des Materials, von diesem umfasst.

Soweit das Material Wasserfänger und/oder Haftvermittler/-katalysatoren umfasst, sind vorzugsweise solche ausgewählt, die bei Reaktion weder Methanol noch Ethanol freisetzen. Das Material ist vorteilhafterweise selbsthärtend, wobei die Selbsthärtung durch Umgebungsfeuchtigkeit erfolgt. Vorteilhafterweise kann jedoch die Härtung beschleunigt werden durch Zusatz eines Startermittels.

Eine Weiterreißfestigkeit in Übereinstimmung mit DIN 53515 des gehärteten Materials der mindestens einen Zwischenschicht liegt in einem Bereich von etwa 0,5 N/mm bis etwa 15 N/mm, bevorzugt in einem Bereich von etwa 1,8 N/mm bis etwa 6 N/mm. Eine Zugfestigkeit gemäß ISO 527 des gehärteten Materials liegt in einem Bereich von etwa 0,2 N/mm² bis etwa 8 N/mm², bevorzugt in einem Bereich von etwa 0,5 N/mm² bis etwa 7,5 N/mm². Die Dehnung gemäß ISO 527 liegt in einem Bereich von etwa 30 % bis etwa 1000 %, weiter bevorzugt in einem Bereich von etwa 100 % bis etwa 700 %, noch weiter bevorzugt in einem Bereich von etwa 200 % bis etwa 500 %, wobei die vorstehenden Werte die Reißdehnung beschreiben. Sämtliche Parameter wurden bei 23 °C und 50 % relativer Luftfeuchtigkeit an einer 2 mm starken Schicht des Materials gemessen. Das Elastizitätsmodul, gemessen in Übereinstimmung mit der Norm ISO 527, liegt für das Material in einem Bereich von etwa 250 kPa bis etwa 1000 kPa.

Das Startermittel, welches vorteilhafterweise dem Material zugebbar ist, ist vorteilhafterweise ausgewählt aus einer Gruppe umfassend polymere Acetate. Besonders bevorzugt ist das Startermittel ausgewählt aus einer Gruppe umfassend Polyvinylacetate. Weiter bevorzugt ist das polymere Acetat ausgewählt aus einer Gruppe umfassend Copolymere aus Polyvinylalkohol und Polyvinylacetat. Polyvinylacetat bildet bei Copolymeren vorteilhafterweise den Hauptanteil des Copolymeren.

Das Startermittel kann weiterhin neben dem polymeren Acetat umfassen mindestens ein organisches Carbonat. Vorteilhafterweise ist das organische Carbonat ausgewählt aus einer Gruppe umfassend cyclische Carbonate, und ist besonders bevorzugt Propylencarbonat. Weiter vorteilhafterweise ist das Startermittel gebildet aus etwa 70 Gew.-% bis etwa 98 Gew.-% des polymeren Acetats und 2 Gew.-% bis etwa 30 Gew.-% eines organischen Carbonats, weiter bevorzugt ist das polymere Acetat im Startermittel zugegen in einer Menge in einem Bereich von etwa 85 Gew.-% bis etwa 95 Gew.-%, und das organische Carbonat in einer Menge in einem Bereich von etwa 5 Gew.-% bis etwa 15 Gew.-%, wobei die Gewichtsprozente jeweils bezogen sind auf die Gesamtmenge des Startermittels. Vorteilhafterweise besteht das Startermittel aus etwa 85 % bis 95 Gew.-% eines Copolymeren aus Polyvinylalkohol und Polyvinylacetat mit Polyvinylacetat als Hauptanteil und etwa 5 Gew.-% bis etwa 15 Gew.-% Propylencarbonat, wobei die Gewichtsangaben jeweils bezogen sind auf die Gesamtmenge des Startermittels.

Besonders bevorzugte Materialien für die Herstellung der Zwischenschicht umfassen mindestens ein silanterminiertes Polymer, gebildet in einer Reaktion mindestens eines Polyethylenglykols und/oder Polypropylenglykols mit mindestens einer Silylgruppe, vorzugsweise einen Isocyanatoalkylalkoxysilan, in einer Menge in einem Bereich von etwa 35 Gew.-% bis etwa 60 Gew.-%, wobei besonders bevorzugt mindestens zwei silanterminierte Polymere eingesetzt werden, weiterhin umfassend mindestens einen Weichmacher, ausgewählt aus der Gruppe der Polyether, insbesondere Polyethylenglykol und/oder Polypropylenglykol, mit einem Molekulargewicht in einem Bereich zwischen etwa 800 und etwa 4000 in einer Menge in einem Bereich von etwa 5 Gew.-% bis etwa 15 Gew.-%, weiterhin umfassend als Füllstoff einen pulverförmigen mineralischen Füllstoff, bevorzugt Talkum, in einer Menge in einem Bereich von etwa 25 Gew.-% bis etwa 45 Gew.-%, sowie sonstige Additive (Wasserfänger, Haftvermittler und Katalysatoren) in einer Menge in einem Bereich von insgesamt etwa 0,3 Gew.-% bis etwa 5 Gew.-%, wobei die Gew.-% jeweils bezogen sind auf die Gesamtmenge des Materials.

Die Dicke der mindestens einen Zwischenschicht des erfindungsgemäßen Verkehrsflächenaufbaus beträgt vorteilhafterweise zwischen 1 mm und etwa 5 mm, weiter bevorzugt zwischen etwa 1,6 mm und 4 mm. Vorteilhafterweise ist die mindestens eine Zwischenschicht mit einer Gesteinskörnung und/oder Gummigranulat abgestreut. Vorteilhafterweise weist die dabei eingesetzte Körnung ein Größtkorn in einem Bereich von etwa ≥ 1 mm, bevorzugt etwa ≥ 1 mm bis etwa ≤ 8 mm, weiter bevorzugt von etwa ≥ 2 mm bis etwa ≤ 5 mm, auf.

Die Dicke der mindestens einen Asphaltoberschicht des erfindungsgemäßen Verkehrsflächenaufbaus liegt vorteilhafterweise in einem Bereich von etwa 1 cm bis etwa 6 cm, weiter bevorzugt in einem Bereich von etwa 2 cm bis etwa 3,5 cm. Die Schichtdicke der mindestens einen Unterschicht des erfindungsgemäßen Verkehrsflächenaufbaus liegt vorteilhafterweise in einem Bereich von etwa 5 cm bis etwa 40 cm, weiter bevorzugt in einem Bereich von etwa 10 cm bis etwa 30 cm.

Weiter vorteilhafterweise weist die mindestens eine Unterschicht Schollen mit einer Kantenlänge von etwa ≥ 0,5 m, bevorzugt etwa ≥ 0,5 m bis etwa ≤ 2,8 m, weiter bevorzugt etwa ≤ 2,5 m, auf.

Weiter bevorzugt ist die mindestens eine Unterschicht, bevorzugt genau eine Betonschicht, ausgebildet als einschichtige, fugenlose Betondecke als Verkehrsflächenunterkonstruktion. Der eingesetzte Beton weist vorteilhafterweise nur eine geringe Festigkeit der Festigkeitsklasse C25/30 auf, und kann vorteilhafterweise vor Aufbringung der mindestens einen Zwischenschicht entspannt werden, zum Beispiel mit einer Polygonal-Walze. Weiter vorteilhafterweise umfasst die mindestens eine Unterschicht keine Bewehrung. Weiter vorteilhafterweise umfasst die mindestens eine Unterschicht keinen Betonstahl. Weiter vorteilhafterweise umfasst die mindestens eine Unterschicht keine Fasern jeglicher Art. Die Gesteinskörnung des Betons ist vorteilhafterweise ausgewählt aus einer solchen mit einem Größtkorn von ≥ 4 mm. Vorzugsweise ist als Gesteinskörnung Kies vorgesehen, es können jedoch auch andere Gesteine mit einer erhöhten Sensitivität gegenüber der Alkali-Kieselsäure-Reaktion eingesetzt werden.

Der Zementgehalt des für die Herstellung der mindestens einen Unterschicht eingesetzten Betons liegt unter 300 kg/m³, und liegt vorteilhafterweise in einem Bereich von etwa 250 kg/m³ bis etwa 280 kg/m³.

Bevorzugt ist die Oberfläche der mindestens einen Unterschicht, die der mindestens einen Zwischenschicht zugewandt ist, gekerbt. Durch die Kerbung werden Sollbruchstellen geschaffen, die vorteilhafterweise kleinere Kantenlängen der Schollen ermöglichen. Die mindestens eine Unterschicht soll vorteilhafterweise häufiger reißen können.

Der für die mindestens eine Unterschicht eingesetzte Beton weist eine steife Konsistenz auf, und kann vorteilhafterweise auch mit einem Asphaltstraßenfertiger eingebaut und anschließend abgewalzt werden.

Ein wie im Vorstehenden definierter Beton für die mindestens eine Unterschicht weist niedrige Materialkosten auf und ist aufgrund des Einbaus durch Asphaltstraßenfertiger und die Nichtausbildung von Fugen ohne Einsatz von Dübeln und Ankern, als auch die Nichtnotwendigkeit der Vorsehung einer Oberflächentexturierung günstig herzustellen.

Die im Vorstehenden beschriebene mindestens eine Unterschicht beziehungsweise Beton wird durch die Zwischenschicht überdeckt. Die Zwischenschicht ist dabei in der Lage, Risse im Beton zu überbrücken, und weist elastische Eigenschaften auf. Hierdurch wird der Beton und die darunter liegende Konstruktion dauerhaft vor Wasserzutritt und mögliche Erosion geschützt.

Auf die mindestens eine Zwischenschicht, vorteilhafterweise genau eine Zwischenschicht, wird die mindestens eine Asphaltoberschicht, vorteilhafterweise genau eine Asphaltdeckschicht, aufgebracht. Der Asphalt kann dabei insbesondere ein Gussasphalt, insbesondere ein Gussasphalt mit offenporiger Oberfläche, sein. Als Mischgut für die Herstellung der Asphaltober- oder -deckschicht wird vorteilhafterweise ein solches eingesetzt, welches aus der WO 2010/089097 A1 bekannt ist. Der Gegenstand der WO 2010/089097 A1 wird hiermit voll umfänglich zum Gegenstand der vorliegenden Anmeldung gemacht. Damit wird vorteilhafterweise ein Asphaltmischgut eingesetzt, welches selbstverdichtend ist, ähnlich wie ein Gussasphalt, wobei das in der genannten Druckschrift eingesetzte Asphaltmischgut eine vollständig neue, eigenständige Mischgutklasse darstellt. Aber auch sonstige Asphalte, Gussasphalte et cetera können eingesetzt werden zur Bildung der mindestens einen Asphaltoberschicht. Besonders bevorzugt wird ein Asphaltmischgut eingesetzt bestehend aus Splitt, Sand, Füller und insbesondere bituminöses Bindemittel, sowie gegebenenfalls Zusätzen, wobei die Gesamtmasse aller Bestandteile 100 M.-% beträgt, wobei der Splittgehalt mit einer Gesteinkörnung ≥ 1 mm zwischen 65 M.-% und 80 M.-% liegt, der Sandgehalt an Natur- und/oder Brechsand mit einer Körnung ≥ 0,063 mm und ≤ 2 mm zwischen 2 M.-% und 15 M.-% liegt, der Füllergehalt mit einer Gesteinskörnung ≤ 0,063 mm zwischen 15 M.-% und 19,5 M.-% liegt, und wobei der Bindemittelgehalt zwischen 6,8 M.-% und 7,5 M.-% liegt.

Soweit in den Ansprüchen und der Beschreibung der vorliegenden Anmeldung der Begriff "etwa" verwendet wird, so ist hierdurch für den angesprochenen Fachmann sogleich ersichtlich, dass die genannten Bereichsgrenzen keine starren Grenzen sind, sondern vielmehr auch geringfügige Abweichungen hiervon noch Ziel und Zweck der vorliegenden Erfindung erfüllen. Insbesondere sind Abweichungen von +/- 5 %, weiter bevorzugt +/- 2 %, von den angegebenen Bereichsgrenzen solche, welche in den Schutzbereich der vorliegenden Erfindung fallen.

Die vorliegende Erfindung betrifft weiterhin die Verwendung eines Materials, wie dieses in den Ansprüchen 1 bis 10 und vorstehend in der Beschreibung dargelegt definiert ist, zur Herstellung mindestens einer Zwischenschicht auf mindestens einer Unterschicht zur Herstellung von Verkehrsflächen.

Diese und weitere Vorteile des erfindungsgemäßen Verkehrsflächenaufbaus werden an folgendem Beispiel einer nachträglichen Ausrüstung eines bestehenden Aufbaus näher beschrieben.

Es wurde ein dreischichtiger Verkehrsflächenaufbau mit einer Unterschicht in einer Stärke von etwa 20 cm, einer Zwischenschicht in einer Stärke von etwa 2 mm, und einer Asphaltdeckschicht in einer Stärke von etwa 2,5 cm hergestellt.

Für die Asphaltdeckschicht wurde ein Asphaltmischgut, wie in der WO 2010/089097 A1 beschrieben und wie vorstehend in der Beschreibung definiert, eingesetzt, welches lärmarm ist und eine offenporige Oberfläche aufweist.

Die Zwischenschicht wurde hergestellt aus einem Material ohne Zusatz eines Startermittels, wobei das Material bestand aus 52 Gew.-% eines Kondensationsproduktes aus Ethoxysilan mit einem Polypropylenoxid, 10 Gew.-% eines Polymethacrylsäureesters, gebildet aus Polymethacrylsäure und Dodecanol mit einem Rest R mit 12 Kohlenstoffatomen, 0,5 Gew.-% Diethanolamin als Katalysator, 2 Gew.-% Ruß und 35 Gew.-% Calciumcarbonat in Pulverform als Füllstoff.

Alternativ kann die Zwischenschicht hergestellt werden aus einem Material auf Basis eine silanterminierten Polyethers in Mischung mit einem weiteren silanterminierten Polyether, wobei die Polyether unterschiedliche Viskositäten aufwiesen. Es ist in der vorliegenden Erfindung grundsätzlich vorteilhaft, Mischungen silantermierter Polyether, sei es auf Basis von Polypropylenoxid oder auf Basis von Polyethylenoxid oder beider, einzusetzen. In dem alternativen Material für die Zwischenschicht wurden 30 Gew.-% eines Dimethoxymethylsilylmethylcarbamat-terminierten Polyethers (GENIOSIL STP E10) mit einer dynamischen Viskosität bei 25 °C gemäß DIN 51562 von 10 Pa*s und 13 Gew.-% eines ebenfalls silylmethylcarbamat-terminierten Polyethers (GENIOSIL WP1) mit einer dynamischen Viskosität bei 25 °C nach Brookfield von 0,7 Pa*s vermischt mit 11 Gew.-% Polypropylenglykol als Weichmacher mit einem Molekulargewicht von 2000, 42,5 Gew.-% Talkum als Füllstoff, 2 Gew.-% eines Wasserfängers (Silquest Y-15866, Momentive Performance Materials Inc.) und 1,5 Gew.-% eines Haftvermittlers, der gleichzeitig als Katalysator dient (Silquest VX-25225, Momentive Performance Materials Inc.) gemischt.

Die vorstehenden Gewichtsprozentangaben beziehen sich jeweils auf die Gesamtmenge des Materials.

Der Beton wurde, bezogen auf 1,0 m³ Gesamtvolumen, nach folgender Betonrezeptur zusammengesetzt: 350 kg Zement CEM I 42,5 N, HeidelbergCement AG, Paderborn, 154 kg Wasser, 555 kg Sand 0/2 mm, 310 kg Basaltsplitt 2/5 mm, 450 kg Basaltsplitt 8/16 mm, 540 kg Basaltsplitt 16/22 mm, 1,19 kg Zusatzmittel LPS A-94, als Luftporenbildner, Hersteller Sika Deutschland GmbH, Stuttgart und 1,4 kg Zusatzmittel Pantarhol 85 (VZ) als Verzögerer, Hersteller Ha-Be Betonchemie GmbH & Co. KG, Hameln. Wir haben das Datenblatt als Anlage beigefügt. Diesem ist der Hersteller zu entnehmen.

Eine ursprüngliche Oberbetonschicht wurde in einer Dicke von etwa 2,5 cm bis etwa 3 cm abgefräst. Nach Abfräsung wurde die verbleibende Betonkonstruktion mit dem Material versehen, indem dieses aus Eimern ausgeschüttet und mit Schiebern glatt gezogen wurde. Anschließend wurde die hieraus gebildete Zwischenschicht abgestreut mit grober Gesteins- und Gummigranulatkörnung mit einer Korngröße in einem Bereich von etwa 2 mm bis etwa 5 mm. Durch die Abstreuung mit der Körnung wird eine bessere Verbindung zu der nachträglich aufgebrachten Asphaltschicht erreicht.

Die wie vorstehend definierten Materialien wiesen eine Verarbeitungs- und Aushärtzeit in einem Bereich von etwa 15 bis etwa 20 Minuten auf. Wird ein Startermittel zugegeben, gilt, dass je höher die Menge an Startermittel, desto kürzer die Verarbeitungszeit; die Durchhärtezeit des Materials ist von der Luftfeuchtigkeit, der Feuchtigkeit des Betons und/oder der Mengenzugabe eines Startermittels abhängig. Je höher die Menge an einem Startermittel und die Feuchtigkeit des Betons ist, desto schneller erfolgt die Durchhärtung.

Mit der vorliegenden Erfindung wird damit vorteilhafterweise ein Verkehrsflächenaufbau definiert, der so aus dem Stand der Technik noch nicht bekannt war und insbesondere den Einsatz eines kostengünstigen Betons zur Herstellung der mindestens einen Unterschicht ermöglicht bei gleichzeitiger Zurverfügungstellung einer weitgehend Wasserundurchlässigkeit durch das spezifische Material, welches für die mindestens eine Zwischenschicht eingesetzt ist.

## Patentansprüche

1. Verkehrsflächenaufbau umfassend mindestens eine Unterschicht, mindestens eine Asphaltoberschicht und mindestens eine Zwischenschicht, die auf der mindestens einen Unterschicht aufgebracht ist, wobei die mindestens eine Zwischenschicht ein Material umfasst, umfassend mindestens ein silanterminiertes Polymer, wobei das mindestens eine silanterminierte Polymer ausgewählt ist aus einer Gruppe umfassend Polyethylen- und/oder Polypropylenoxid, auch mit Urethan-Segmenten, und/oder Polyurethan.

2. Verkehrsflächenaufbau gemäß Anspruch 1, **dadurch gekennzeichnet, dass** das mindestens eine silanterminierte Polymer in einer Menge in einem Bereich von etwa 20 Gew.-% bis etwa 70 Gew.-%, bezogen auf die Gesamtmenge des Materials, in diesem enthalten ist.

3. Verkehrsflächenaufbau gemäß einem der vorhergehenden Ansprüche, **dadurch gekennzeichnet, dass** das mindestens eine silanterminierte Polymer endständige Methoxy-, Ethoxy- und/oder Propoxy-Gruppen aufweist.

4. Verkehrsflächenaufbau gemäß einem der vorhergehenden Ansprüche, **dadurch gekennzeichnet, dass** das Material weiterhin umfasst mindestens einen Polymethacrylsäureester.

5. Verkehrsflächenaufbau gemäß Anspruch 4, **dadurch gekennzeichnet, dass** die Estergruppe gebildet ist aus einem Rest R mit 2 bis 20 Kohlenstoffatomen.

6. Verkehrsflächenaufbau gemäß einem der Ansprüche 4 oder 5, **dadurch gekennzeichnet, dass** das Material den mindestens einen Polymethacrylsäureester in einer Menge in einem Bereich von etwa 4 Gew.-% bis etwa 15 Gew.-%, bezogen auf die Gesamtmenge des Materiales, umfasst.

7. Verkehrsflächenaufbau gemäß einem der vorhergehenden Ansprüche, **dadurch gekennzeichnet, dass** das Material weiterhin mindestens einen Füllstoff und/oder Ruß umfasst.

8. Verkehrsflächenaufbau gemäß einem der vorhergehenden Ansprüche, **dadurch gekennzeichnet, dass** dem Material ein Startermittel zugebbar ist.

9. Verkehrsflächenaufbau gemäß Anspruch 8, **dadurch gekennzeichnet, dass** das Startermittel ausgewählt ist aus einer Gruppe umfassend polymere Acetate.

10. Verkehrsflächenaufbau gemäß einem der vorhergehenden Ansprüche, **dadurch gekennzeichnet, dass** die Dicke der mindestens einen Zwischenschicht zwischen etwa 1 mm und etwa 5 mm beträgt.

11. Verkehrsflächenaufbau gemäß einem der vorhergehenden Ansprüche, **dadurch gekennzeichnet, dass** die mindestens eine Zwischenschicht mit einer Gesteinskörnung und/oder Gummigranulat abgestreut ist.

12. Verkehrsflächenaufbau gemäß Anspruch 11, **dadurch gekennzeichnet, dass** die Gesteinskörnung ein Größtkorn in einem Bereich von mindestens etwa ≥ 1 mm aufweist.

13. Verkehrsflächenaufbau gemäß einem der vorhergehenden Ansprüche, **dadurch gekennzeichnet, dass** die mindestens eine Unterschicht Schollen mit einer Kantenlänge kleiner gleich etwa 2,5 m aufweist.

14. Verwendung eines Materiales gemäß einem der Ansprüche 1 bis 9 zur Herstellung mindestens einer Zwischenschicht auf mindestens einer Unterschicht zur Herstellung von Verkehrsflächen.

## Claims

1. Circulation area construction comprising at least one base layer, at least one asphalt upper layer and at least one intermediate layer, which is applied to the at least one base layer, wherein the at least one intermediate layer comprises a material comprising at least one silane terminated polymer, wherein the at least one silane terminated polymer is selected from a group consisting of polyethylene oxide and/or polypropylene oxide, both also including urethane segments, and/or polyurethane.

2. Circulation area construction according to claim 1, wherein the at least one silane terminated polymer is present in the material in an amount ranging from about 20% by weight to about 70% by weight, in relation to a total amount of the material.

3. Circulation area construction according to one of the preceding claims, **characterized in that** the at least one silane terminated polymer has terminal methoxy groups, ethoxy groups and/or propoxy groups.

4. Circulation area construction according to one of the preceding claims, **characterized in that** the material further comprises at least one polymethacrylicacidester.

5. Circulation area construction according to claim 4, **characterized in that** the ester group is formed from a remainder R having 2 to 20 carbon atoms.

6. Circulation area construction according to one of the claims 4 or 5, **characterized in that** the material comprises the at least one poly methacrylic acid ester in an amount ranging from about 4% by weight to about 15% by weight, in relation to a total amount of the material.

7. Circulation area construction according to one of the preceding claims, **characterized in that** the material further comprises at least one filler and/or carbon black.

8. Circulation area construction according to one of the preceding claims, **characterized in that** a starter agent can be added to the material.

9. Circulation area construction according to claim 8, **characterized in that** the starter agent is selected from a group comprising polymeric acetates.

10. Circulation area construction according to one of the preceding claims, **characterized in that** the thickness of the at least one intermediate layer is between about 1 mm and about 5 mm.

11. Circulation area construction according to one of the preceding claims, **characterized in that** an aggregate and/or rubber granulate is applied over the at least one intermediate layer.

12. Circulation area construction according to claim 11, **characterized in that** the aggregate has a maximum grain size in a range of at least about ≧1 mm.

13. Circulation area construction according to one of the preceding claims, **characterized in that** the at least one base layer includes slabs having an edge length that is equal to or less than about 2.5 m.

14. Use of a material according to one of the claims 1 to 9 for producing at least one intermediate layer on at least one base layer for producing circulation areas.

## Revendications

1. Structure de surface de circulation comprenant au moins une couche inférieure, au moins une couche supérieure asphaltée et au moins une couche intermédiaire qui est posée sur l'au moins une couche inférieure, l'au moins une couche intermédiaire contenant un matériau qui contient au moins un polymère à terminaison silane, l'au moins un polymère à terminaison silane étant choisi parmi un groupe comprenant l'oxyde de polyéthylène et/ou l'oxyde de polypropylène, avec aussi des segments d'uréthane, et/ou du polyuréthane.

2. Structure de surface de circulation selon la revendication 1, **caractérisée en ce que** l'au moins un polymère à terminaison silane est contenu dans le matériau dans une quantité de l'ordre d'environ 20 % en poids à environ 70 % en poids par rapport à la quantité totale de celui-ci.

3. Structure de surface de circulation selon une des revendications précédentes, **caractérisée en ce que** l'au moins un polymère à terminaison silane possède des groupes méthoxy, éthoxy et/ou propoxy terminaux.

4. Structure de surface de circulation selon une des revendications précédentes, **caractérisée en ce que** le matériau contient en outre au moins un ester d'acide polyméthacrylique.

5. Structure de surface de circulation selon la revendication 4, **caractérisée en ce que** le groupe ester est formé d'un reste R avec 2 à 20 atomes de carbone.

6. Structure de surface de circulation selon une des revendications 4 ou 5, **caractérisée en ce que** le matériau contient au moins un ester d'acide polyméthacrylique dans une quantité de l'ordre d'environ 4 % en poids à environ 15 % en poids par rapport à la quantité totale de celui-ci.

7. Structure de surface de circulation selon une des revendications précédentes, **caractérisée en ce que** le matériau contient en outre au moins un matériau de charge et/ou une suie.

8. Structure de surface de circulation selon une des revendications précédentes, **caractérisée en ce qu'**un moyen d'amorçage peut être ajouté au matériau.

9. Structure de surface de circulation selon la revendication 8, **caractérisée en ce que** le moyen d'amorçage est choisi parmi un groupe comprenant des polymères d'acétates.

10. Structure de surface de circulation selon une des revendications précédentes, **caractérisée en ce que** l'épaisseur de l'au moins une couche intermédiaire se situe entre environ 1 mm et environ 5 mm.

11. Structure de surface de circulation selon une des revendications précédentes, **caractérisée en ce que** l'épaisseur de l'au moins une couche intermédiaire est recouverte avec un agrégat rocheux et/ou un granulé de caoutchouc.

12. Structure de surface de circulation selon la revendication 11, **caractérisée en ce que** l'agrégat rocheux présente une granulométrie de l'ordre d'au moins environ 1 mm.

13. Structure de surface de circulation selon une des revendications précédentes, **caractérisée en ce que** l'au moins une couche inférieure présente des plaques avec des arêtes d'une longueur inférieure ou égale à environ 2,5 m.

14. Utilisation d'un matériau selon une des revendications 1 à 9 pour la fabrication d'une couche intermédiaire sur au moins une couche inférieure pour la fabrication de surfaces de circulation.
